# EUROPÄISCHE PATENTSCHRIFT

(11) **EP 1 197 005 B1**
(45) Veröffentlichungstag und Bekanntmachung des Hinweises auf die Patenterteilung: **06.10.2004**
(21) Anmeldenummer: 00956088.9
(22) Anmeldetag: 19.07.2000
(51) Int. Cl.: H04B 1/52, H04B 1/12

(54) **FUNKSENDE- UND -EMPFANGSGERÄT**
RADIO TRANSMITTER AND RECEIVER
APPAREIL D'EMISSION ET DE RECEPTION RADIO

(30) Priorität: 22.07.1999 DE 19934502
(43) Veröffentlichungstag der Anmeldung: 17.04.2002
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: PCT/DE2000/002361
(87) Internationale Veröffentlichungsnummer: WO 2001/008318

(56) Entgegenhaltungen:
- US-A- 3 696 429
- US-A- 4 535 476
- US-A- 5 444 864

## Beschreibung

Die Erfindung betrifft ein Funksende- und -empfangsgerät, insbesondere Mobilfunk-Endgerät, nach dem Oberbegriff des Anspruchs 1.

Bei nach dem GSM-Standard arbeitenden Mobilfunk-Endgeräten sind ein permanenter gleichzeitiger Sende- und Empfangsbetrieb gemäß dem Standard nicht zulässig. Diese Geräte können daher mit einer gemeinsamen Sende- und Empfangsantenne betrieben werden, ohne daß die akute Gefahr einer Übersteuerung des Empfängereingangs durch das Sendesignal besteht.

Anders ist die Situation bei Mobilfunk-Endgeräten, die nach dem künftigen UMTS-Standard konzipiert sind. Bei solchen Geräten mit dem sogenannten Vollduplex-Betrieb wird eine zeitliche Überschneidung zwischen Sende- und Empfangsbetrieb zulässig und im Betrieb auch gegeben sein. Bei diesen Geräten ist daher - wie generell bei Funksende- und Empfangsgeräten mit zeitlichen Überschneidungen zwischen Sende- und Empfangsbetrieb - zur Vermeidung einer Übersteuerung oder gar zur Zerstörung des Empfängereingangs durch die hohe Leistung des Sendesignals eine effiziente Entkoppelung zwischen Sender und Empfänger nötig.

Dieses Problem wird nach dem Stand der Technik durch ein sogenanntes Duplexfilter oder einen Duplexer gelöst. Im Grunde handelt es sich hierbei um zwei extrem steilflankige, hochwertige Bandpaßfilter. Auf der Sendeseite sorgt ein Sendefilter für eine Unterdrückung des Senderrauschens und eventueller Nebenaussendungen. Auf der Empfangsseite gewährleistet ein Empfangsfilter eine sehr hohe Empfängerselektivität. Alternativ kann der erwähnte Duplexer auch als Bandsperren-Duplexer ausgeführt sein, bei dem das Sendefilter eine Bandsperre mit Nullstelle im Empfangsband und das Empfangsfilter eine Bandsperre mit Nullstelle im Sendeband ist.

Die erwähnten Filterausführungen sind aufgrund ihrer speziellen Eigenschaften praktisch nicht integrierbar und stehen somit dem Trend zu immer kleineren und leichteren Mobilfunk-Endgeräten entgegen. Zudem sind sie kostenaufwendig und auch unter dem Blickwinkel der immer weiter fortschreitenden Kostensenkung auf diesem Gebiet problematisch.

Die Patentschrift US-A-5 444 864 offenbart eine Sende-Empfänger- Entkopplung gemäß dem Stand der Technik.

Der Erfindung liegt daher die Aufgabe zugrunde, ein Funksende- und -empfangsgerät mit verbesserter Sender-Empfänger-Entkopplung bereitzustellen, das insbesondere mit verringertem Platzbedarf und Kostenaufwand für diese Funktion auskommt.

Diese Aufgabe wird durch ein Funksende- und -empfangsgerät mit den Merkmalen des Anspruchs 1 gelöst.

Die Erfindung schließt den wesentlichen Gedanken ein, die erforderliche Sender-Empfänger-Entkopplung bei einem im Frequenzmultiplex arbeitenden Funksende- und -empfangsgerät weitgehend durch eine Kompensation des am Empfängereingang anliegenden Sendesignalanteils zu bewerkstelligen. Dies ermöglicht einen Verzicht auf extrem steilflankige und nicht in integrierter Halbleitertechnologie darstellbare Sende- und Empfangsfilter und letztlich eine integrierte und damit platzsparende und kostengünstige Ausführung der Entkopplungsmittel.

Das Kompensationsglied ist insbesondere parallel zu einem Sendeband-Durchlaßfilter und Empfangsband-Durchlaßfilter - die beide aufgrund des Vorsehens des Kompensationsgliedes keinen extremen Anforderungen genügen müssen - geschaltet und mit dem Eingang eines Empfangs-Vorverstärkers oder Empfangsmischers des Empfangsteils verbunden.

Das Kompensationsglied umfaßt insbesondere Mittel zur getrennten Einstellung von Phase und Amplitude des zu verarbeitenden Signals, so daß es ein in Phase und Amplitude zur Auslöschung eines übersprechenden Sendesignalanteils geeignetes Ausgangssignal bereitstellt.

Es kann insoweit fest abgeglichen sein - und zwar entweder auf eine Frequenz bzw. einen Kanal oder auf mehrere Frequenzen bzw. Kanäle, wobei dann jedem Kanal ein Satz Abgleichparameter zugeordnet ist und bei einem Kanalwechsel auch eine Umschaltung zwischen den Abgleichparametersätzen vorgenommen wird. Unter Abgleichparametern sind hier ein Phasendrehwinkel und ein Amplitudenwert zu verstehen. Diese, auch als "statisch" zu kennzeichnende, Ausführung mit fest eingestellten Parametern ist besonders einfach und kostengünstig realisierbar.

Flexibler auf unterschiedliche Einsatzbedingungen anpaßbar und in der Praxis daher aus derzeitiger Sicht bevorzugt ist jedoch eine Ausführung des Kompensationsgliedes mit adaptiver Regelung. Mit einer solchen können auch Änderungen in der Antennenanpassung kompensiert werden, die beispielsweise durch Berührung oder nahe Nachbarschaft der Antenne mit leitfähigen Gegenständen oder dem Körper auftreten können. Die adaptive Regelung geht von einer Spannungsmessung am Empfängereingang aus, wobei Phase und Amplitude im Kompensationsglied so verändert werden, daß diese gemessene Spannung minimiert wird. Die zur adaptiven Steuerung des Kompensationsgliedes benötigten Mittel können unter dem Begriff "Kompensations-Steuereinheit" begrifflich zusammengefaßt werden. Neben der Meßeinrichtung - die im übrigen auch als Leistungsmeßeinrichtung ausgeführt sein kann - umfaßt diese Kompensations-Steuereinheit in einer bevorzugten Ausführung Mittel zur ZF-Umsetzung des Eingangssignals auf eine eigene Zwischenfrequenz (unter Nutzung der im Empfangsteil ohnehin enthaltenen Vorverstärker und Mischer), ein nachgeschaltetes einfaches Bandpaßfilter und ein diesem nachgeschaltetes einfaches AM-Empfangsteil.

Dessen Ausgangssignal repräsentiert dann die Eingangsgröße der adaptiven Regelung. Das erwähnte Bandpaßfilter ist zur Erzielung einer hohen Empfindlichkeit der Regelung in vorteilhafter Weise schmalbandig auf die Empfangsfrequenz abgestimmt.

Das Kompensationsglied ist in einer platzsparenden und kostengünstigen Ausführung in die HF-Komponenten des Sendeund Empfangsgerätes integriert und zwar insbesondere in Form eines hoch integrierten (LSI- bzw. VLSI-)Schaltkreises in Silizium-Technologie.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1: eine schematische Darstellung einer ersten Ausführungsform der Erfindung in Form eines Funktions-Blockschaltbildes,
- Fig. 2: eine schematische Darstellung zur Erläuterung der Steuerung des Kompensationsgliedes aus Fig. 1,
- Fig. 3: eine schematische Darstellung einer zweiten Ausführungsform der Erfindung in Form eines Funktions-Blockschaltbildes,
- Fig. 4: eine schematische Darstellung einer dritten Ausführungsform der Erfindung in Form eines Funktions-Blockschaltbildes, und
- Fig. 5: eine schematische Darstellung einer vierten Ausführungsform der Erfindung in Form eines Funktions-Blockschaltbildes.

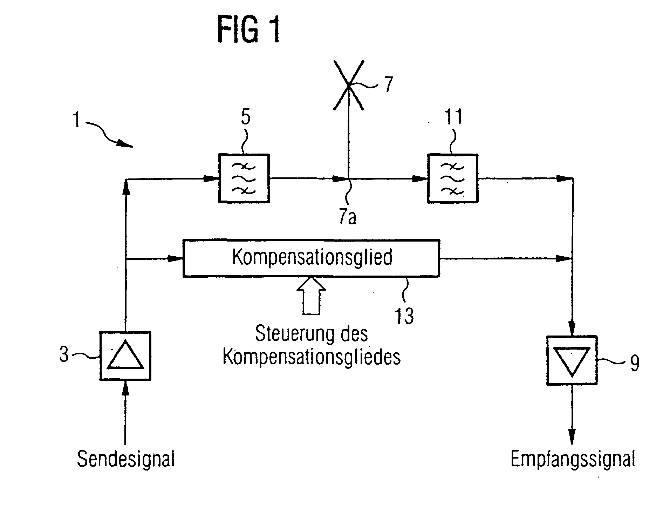

In Fig. 1 sind skizzenartig die im Zusammenhang mit der Ausführung der Erfindung wesentlichen Komponenten eines Mobilfunk-Endgerätes 1 und deren Zusammenwirken gezeigt. Eine Sendeendstufe 3, die eingangsseitig ein Sendesignal empfängt, ist ausgangsseitig über ein Sendeband-Durchlaßfilter 5 mit einem Anschlußpunkt 7a einer kombinierten Sende-/Empfangsantenne 7 verbunden. Zwischen den Anschlußpunkt 7a der Antenne 7 und den Eingang eines Empfangs-Vorverstärkers 9, an dessen Ausgang ein vorverstärktes Empfangssignal bereitgestellt wird, ist ein Empfangsband-Durchlaßfilter 11 geschaltet. Die Durchlaßkurven des Sendeband-Durchlaßfilters 5 und des Empfangsband-Durchlaßfilters 11 haben einen über den Standard des Mobilfunkssystems vorbestimmten Frequenzabstand voneinander; nach dem GSM-Standard (der aber im übrigen ein Zeitduplex zwischen Empfangs- und Sendebetrieb vorsieht) beträgt dieser Abstand beispielsweise 45 MHz. Die beiden Durchlaßfilter 5, 11 bilden gemeinsam ein Duplexfilter, an das jedoch im Zusammenhang mit der vorgeschlagenen Lösung geringere Anforderungen hinsichtlich der Flankensteilheit der Filterkennlinien als bei einem herkömmlichen Mobilfunk-Duplex-Filter gestellt werden und das daher in integrierter Siliziumtechnologie ausführbar ist.

Dies wird ermöglicht durch das Vorsehen eines Kompensationsgliedes 13 zwischen dem Ausgang der Sendeendstufe 3 und dem Eingang des Empfangs-Vorverstärkers 9. Mit dem auf das Kompensationsglied 13 in Fig. 1 gerichteten Pfeil "Steuerung des Kompensationsgliedes" ist in einem allgemeinen Sinne gekennzeichnet, daß das Kompensationsglied 13 im Normalfall keine fest eingestellte, invariable Kompensationscharakteristik hat, sondern in Abhängigkeit von vorbestimmten Eingangsgrößen - etwa einer Frequenz- bzw. Kanalzuordnung und/oder einer in der Anordnung erfaßten Meßgröße - steuerbar ist (Einzelheiten siehe weiter unten).

In Fig. 1 ist gezeigt, daß das Kompensationsglied 13 nach Fig. 1 in einer bevorzugten Ausführung ein Phasen-Kompensationselement 13.1 und ein mit diesem in Reihe geschaltetes Amplituden-Kompensationselement 13.2 aufweist, wobei beide Kompensationselemente 13.1, 13.2 jeweils ein spezifisches Steuersignal "Steuerung des Phasengangs" bzw. "Steuerung der Verstärkung bzw. Dämpfung" empfangen und hinsichtlich ihrer Übertragungscharakteristik durch das jeweilige Steuersignal eingestellt werden.

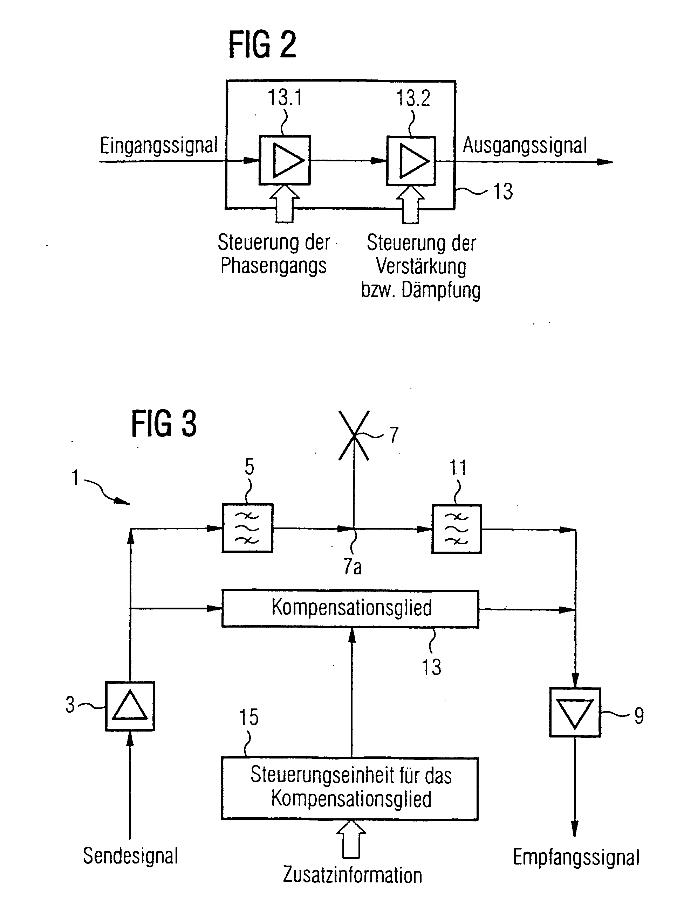

Fig. 3 ist eine weitere Darstellung des Mobilfunk-Endgerätes 1 nach Fig. 1, wobei hier eine Kompensations-Steuereinheit 15, die als Eingangssignal eine Zusatzinformation für den Sende-/Empfangsbetrieb erhält, zur Steuerung des Kompensationsgliedes 13 mit dargestellt ist. Die Kompensations-Steuereinheit 15 kann einen in Art eines Lookup-Table aufgebauten Speicher aufweisen, in dem Zuordnungen zwischen vorbestimmten Sende-/Empfangsfrequenzen bzw. -kanälen und geeigneten Phasenwinkel-/Amplitudengang-Wertepaaren des Kompensationsgliedes 13 gespeichert sind. Hat das Mobilfunk-Endgerät nur eine mögliche Frequenz- bzw. Kanalkonstellation für den Sende-/Empfangsbetrieb, ist entsprechend nur ein einziges Wertepaar vorgesehen. Zusätzlich kann die Kompensations-Steuereinheit 15 in einer besonders flexiblen Ausführung Informationen verarbeiten, die den aktuellen Zustand des Systems kennzeichnen; siehe dazu weiter unten.

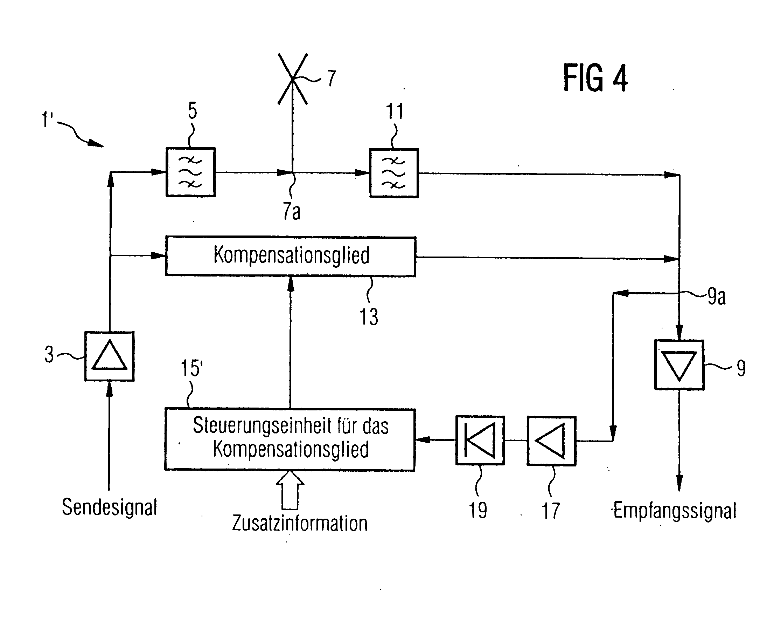

In Fig. 4 ist ein gegenüber Fig. 1 modifiziertes Mobilfunk-Endgerät 1' gezeigt, bei dem die Steuereinheit eine am Eingang des Empfangs-Verstärkers 9 abgegriffene Zusatzinformation empfängt und verarbeitet. Einem Abgriffspunkt 9a sind ein Meßverstärker 17 und eine Gleichrichtereinheit 19 nachgeschaltet, in denen ein die am Eingang des Empfangs-Vorverstärkers 9 anliegende Spannung repräsentierendes zusätzliches Eingangssignal für die Kompensations-Steuereinheit 15 gewonnen wird. Die Steuereinheit 15 ist hier so ausgelegt, daß diese Spannung durch geeignete Einstellung der Phase und Amplitude (auf der Grundlage eines frequenzabhängig vorbestimmten Wertepaares, wie oben erläutert) minimiert wird.

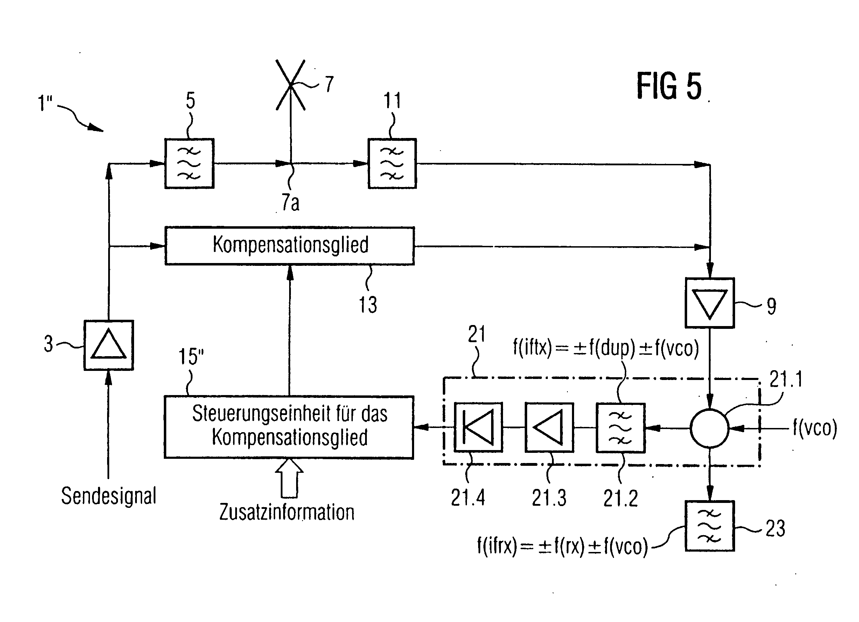

In Fig. 5 ist eine gegenüber Fig. 4 modifizierte Ausführung eines Mobilfunk-Endgerätes 1'' gezeigt, das neben den in Fig. 3 gezeigten Komponenten, die die gleichen Bezugsziffern wie dort tragen und hier nicht nochmals beschrieben werden, ausgangsseitig vom Empfangs-Vorverstärker einen einfachen "Zweitempfänger" 21 aufweist. Dieser ist mit einem Steuereingang einer modifizierten Kompensations-Steuereinheit 15'' verbunden.

Mit dem Zweitempfänger 21 wird die Amplitude des Eingangssignals schmalbandig erfaßt, woraufhin auch sehr kleine Werte der Übersprechleistung erfaßt und kompensiert werden können. Der Zweitempfänger 21 umfaßt einen Mischer 21.1, in dem eine Zwischenfrequenz-Umsetzung des am Empfangs-Vorverstärker 9 anliegenden Empfangssignals auf eine Frequenz f(vco) vorgenommen wird, ein diesem nachgeschaltetes Bandpaßfilter 21.2 zur Ausführung einer einfachen Filterung auf der Zwischenfrequenz f(iftx) und einen dem Bandpaßfilter 21.2 nachgeschalteten AM-Empfänger 21.3/21.4. Im Empfangssignalpfad ist dem Mischer 21.1 ein weiteres einfaches Bandpaßfilter 23 für eine Filterung auf einer zweiten Zwischenfrequenz f(ifrx) nachgeschaltet.

Die vorgeschlagenen Ausführungen sind in technologisch sowie unter Kosten- und Gebrauchswertgesichtspunkten vorteilhafter Weise in Siliziumtechnologie integriert ausführbar. Bei der in Fig. 5 gezeigten Ausführung sind der Mischer 21.1 und der Vorverstärker 21.3 des AM-Empfängers mit einem im Empfangsteil ohnehin vorhandenen Mischer und Vorverstärker realisierbar, so daß insoweit kein zusätzlicher Hardware-Aufwand betrieben werden muß.

Die Ausführung der Erfindung ist nicht auf die oben erläuterten Beispiele beschränkt, sondern auch in Abwandlungen möglich, deren Entwicklung im Rahmen fachgemäßen Handels liegt.

## Patentansprüche

1. Funksende- und -empfangsgerät, insbesondere Mobilfunk-Endgerät (1; 1'; 1''), umfassend:
- eine Sendeendstufe (3),
- ein Empfangsteil (9),
- eine der Sendeendstufe und dem Empfangsteil gemeinsam zugeordnete Sende-/Empfangsantenne (7),
- ein zwischen den Ausgang der Sendeendstufe und einen Antennenanschluß (7a) geschaltetes Sendeband-Durchlaßfilter (5),
- ein zwischen den Antennenanschluß und den Eingang des Empfangsteils geschaltetes Empfangsband-Durchlaßfilter (11) und
- ein zwischen den Ausgang der Sendeendstufe und den Eingang des Empfangsteil geschaltetes Kompensationsglied (13) zur Kompensation eines auf das Empfangsteil übersprechenden Sendesignalanteils,
wobei dem Kompensationsglied (13) eine Kompensations-Steuereinheit (15) zur adaptiven Einstellung der Kompensationscharakteristik, insbesondere der Phase und Amplitude des Ausgangssignals, in Abhängigkeit von der Eingangsspannung oder-leistung am Eingang des Empfangsteils (9) zugeordnet ist, **gekennzeichnet durch**
eine mit der Kompensations-Steuereinheit (15) verbundene Spannungsmeßeinrichtung (17; 19; 21) zur Messung der Eingangsspannung des Empfangsteils (9),
wobei die Spannungsmeßeinrichtung (21) Mittel (21.1) zur ZF-Umsetzung des Eingangssignals des Empfangsteils (9), ein diesen nachgeschaltetes Bandpaßfilter (21.2) und ein mit dessen Ausgang verbundenes AM-Empfangsteil (21.3, 21.4) umfassen, dessen Ausgang zur Einstellung der Kompensationscharakteristik dient.

2. Funksende- und -empfangsgerät nach Anspruch 1,
**dadurch gekennzeichnet,**
**daß** das Kompensationsglied (13) parallel zum Sendeband-Durchlaßfilter (5) und zum Empfangsband-Durchlaßfilter (11) mit dem Eingang eines Empfangs-Vorverstärkers (9) oder Empfangs-Mischers des Empfangsteils geschaltet ist.

3. Funksende- und -empfangsgerät nach Anspruch 1 oder 2,
**dadurch gekennzeichnet,**
**daß** das Bandpaßfilter (21.2) zur Erzielung einer hohen Empfindlichkeit schmalbandig auf die Empfangsfrequenz abgestimmt ist.

4. Funksende- und -empfangsgerät nach einem der Ansprüche 1 bis 3,
**dadurch gekennzeichnet,**
**daß** das Kompensationsglied (13) in eine HF-Komponente der Sendeendstufe (3) bzw. des Empfangsteils (9) integriert ist.

5. Funksende- und -empfangsgerät nach einem der vorangehenden Ansprüche,
**dadurch gekennzeichnet,**
**daß** das Kompensationsglied (13) in hochintegrierter Siliziumtechnologie ausgeführt ist.

## Claims

1. Radio transceiver, in particular mobile telephone (1;1';1''), comprising:
- a transmitter output stage (3),
- a receiver part (9),
- a transmission/reception antenna (7) which is jointly assigned to the transmitter output stage and the receiver part,
- a transmission band-transmitting filter (5) which is connected between the output of the transmitter output stage and an antenna feedpoint (7a),
- a reception band-transmitting filter (11) which is connected between the antenna feedpoint and the input of the receiver part, and
- a compensation element (13) which is connected between the output of the transmitter output stage and the input of the receiver part and has the purpose of compensating crosstalk from a transmission signal element onto the receiver part,
a compensation control unit (15) for adaptively setting the compensation characteristics, in particular the phase and amplitude of the output signal, as a function of the input voltage or input power at the input of the receiver part (9) being assigned to the compensation element (13), **characterized by** a voltage measuring device (17; 19; 21) which is connected to the compensation control unit (15) and has the purpose of measuring the input voltage of the receiver part (9), the voltage measuring device (21) comprising means (21.1) for the IF conversion of the input signal of the receiver part (9), a bandpass filter (21.2) which is connected downstream of the latter and an AM receiver part (21.3, 21.4) which is connected to its output and whose output is used to set the compensation characteristics.

2. Radio transceiver according to Claim 1, **characterized in that** the compensation element (13) is connected in parallel with the transmission band-transmitting filter (5) and with the reception band-transmitting filter (11) to the input of a reception pre-amplifier (9) or reception mixer of the receiver part.

3. Radio transceiver according to Claim 1 or 2, **characterized in that** the bandpass filter (21.2) is tuned to the reception frequency in narrowband fashion in order to achieve a high level of sensitivity.

4. Radio transceiver according to any of Claims 1 to 3, **characterized in that** the compensation element (13) is integrated into an RF component of the transmitter output stage (3) or of the receiver part (9).

5. Radio transceiver according to any one of the preceding claims, **characterized in that** the compensation element (13) is embodied using highly integrated silicon technology.

## Revendications

1. Appareil d'émission et de réception radio, notamment terminal de radiocommunication mobile (1 ; 1' ; 1"), comprenant :
- un étage final d'émission (3),
- une partie réception (9),
- une antenne d'émission/réception (7) affectée en commun à l'étage final d'émission et à la partie réception,
- un filtre passe-bande émission (5) monté entre la sortie de l'étage final d'émission et un raccordement d'antenne (7a),
- un filtre passe-bande réception (11) monté entre le raccordement d'antenne et l'entrée de la partie réception,
- un élément compensateur (13) monté entre la sortie de l'étage final d'émission et l'entrée de la partie réception pour compenser une fraction de signal d'émission diaphonique sur la partie réception,
une unité de commande de compensation (15) étant affectée à l'élément compensateur (13), pour le réglage adaptatif de la caractéristique de compensation, notamment de la phase et de l'amplitude du signal de sortie, en fonction de la tension d'entrée ou de la puissance d'entrée à l'entrée de la partie réception (9),
**caractérisé par**
un dispositif de mesure de tension (17 ; 19 ; 21) raccordé à l'unité de commande de compensation (15) pour mesurer la tension d'entrée de la partie réception (9),
le dispositif de mesure de tension (21) comprenant des moyens (21.1) pour la conversion de la fréquence intermédiaire du signal d'entrée de la partie réception (9), un filtre passe-bande (21.2) monté en aval de ceux-ci et une partie réception à modulation d'amplitude (21.3, 21.4) raccordée à la sortie du filtre passe-bande, dont la sortie sert au réglage de la caractéristique de compensation.

2. Appareil d'émission et de réception radio selon la revendication 1,
**caractérisé en ce que**
l'élément compensateur (13) est monté en parallèle au filtre passe-bande émission (5) et au filtre passe-bande réception (11) avec l'entrée d'un préamplificateur de réception (9) ou d'un mélangeur de réception de la partie réception.

3. Appareil d'émission et de réception radio selon la revendication 1 ou 2,
**caractérisé en ce que**
le filtre passe-bande (21.2) est accordé en bande étroite à la fréquence de réception pour obtenir une haute sensibilité.

4. Appareil d'émission et de réception radio selon l'une quelconque des revendications 1 à 3,
**caractérisé en ce que**
l'élément compensateur (13) est intégré dans une composante HF de l'étage final d'émission (3) resp. de la partie réception (9).

5. Appareil d'émission et de réception radio selon l'une quelconque des revendications précédentes,
**caractérisé en ce que**
l'élément compensateur (13) est exécuté dans une technologie au silicium hautement intégrée.
